# EUROPEAN PATENT APPLICATION

(11) **EP 4 109 175 A1**
(43) Date of publication of application: **28.12.2022**
(21) Application number: 22180099.8
(22) Date of filing: 21.06.2022
(51) Int. Cl.: G03B 21/56, G03B 21/608

(54) **EQUIPMENT FOR THE REALIZATION OF SHOWS IN PONDS**

(30) Priority: 22.06.2021 IT 202100016271
(71) Applicant: Consorzio Como Turistica, 22100 Como (IT)
(72) Inventor: BRUNATI, Daniele, 22020 FAGGETO LARIO CO (IT); BIANCHI, Stefano, 22100 COMO (IT)
(74) Representative: Modiano, Micaela Nadia

(57) **Abstract**

An apparatus for performing shows in stretches of water, comprising a pumping assembly (2) adapted to draw, with its intake, in a stretch of water (4) and connected, with its delivery (2b), to water dispensing means (5) adapted to create at least one water screen (6) above the stretch of water (4), There is also at least one light projector (7), which is adapted to project onto the water screen (6) at least one image. The particularity of the invention resides in that it comprises means for atomizing the water dispensed by the dispensing means (5).

## Description

The present invention relates to an apparatus for performing shows in stretches of water.

Currently, the need to find new forms of tourism promotion in order to increase or develop tourism in territories is felt strongly.

In particular, the need is felt to promote locations that are near stretches of water, such as rivers, lakes or the sea, by creating ever new attractions that can draw the attention and stimulate the curiosity of tourists, encouraging them to visit such locations.

In particular, attractions are known which are based on the use of apparatuses installed in a fixed manner in a preset place and which, however, merely create water games, which are appreciable only during the day and without particularly curious or surprising effects for spectators.

Apparatuses for performing water shows are also known which include an electrically powered submersed pump which is immersed in the stretch of water and is connected to a nozzle capable of emitting a continuous jet of water against a plate which opens the jet in a fan-like shape, forming a continuous film of water which forms a uniform screen on which images are projected by means of a projector placed on the shore, thus creating very striking effects that can be seen even at night.

Although conceptually sound, these devices have some drawbacks.

First, the screen formed by the continuous film of water provided by the jet opened in a fan-like shape is very small in breadth.

In addition, the images projected on said water screen, while being defined, do not present an optimal depth effect.

Moreover, the immersion pumps used in these known apparatuses have limited power and therefore can serve only one water screen at a time, resulting in the need to multiply the number of submersed pumps used if the creation of multiple water screens or water features is required.

Furthermore, the wiring of the submersed pumps is quite complex and time-consuming to provide.

The aim of the present invention is to provide an apparatus for performing shows in stretches of water that is capable of improving the background art in one or more of the aspects mentioned above.

Within this aim, an object of the invention is to provide an apparatus for performing shows in stretches of water that is capable of creating surprising effects that can be appreciated by spectators even at night, having the possibility to create optionally even multiple water screens of considerable dimensions for the projection of the images.

Another object of the invention is to provide an apparatus for performing shows in stretches of water that offers the possibility to create projections of images with three-dimensional effects.

Another object of the invention is to devise an apparatus for performing shows in stretches of water that is mobile, so that it can be transferred easily so that it can be used in different places of the stretch of water.

Another object of the present invention is to provide an apparatus for performing shows in stretches of water that can be obtained easily starting even from commonly commercially available elements and materials.

Another object of the invention is to provide an apparatus for performing water shows in stretches of water that can be managed remotely and can be installed without requiring complex wiring.

Yet another object of the invention is to provide an apparatus for performing shows in stretches of water that is autonomous in terms of power and can be ecologically compatible with the environment.

Moreover, an object of the present invention is to overcome the drawbacks of the background art in a manner that is alternative to any existing solutions.

Not least object of the invention is to provide an apparatus for performing shows in stretches of water that besides being extremely reliable and safe can be structurally simple to provide, so that it can be produced at competitive costs.

This aim and these and other objects which will become better apparent hereinafter are achieved by an apparatus for performing shows in stretches of water according to claim 1, optionally provided with one or more of the characteristics of the dependent claims.

Further characteristics and advantages of the invention will become better apparent from the description of a preferred but not exclusive embodiment of the apparatus according to the invention, illustrated by way of non-limiting example in the accompanying drawings, wherein:
Figure 1 is a sectional front view of the apparatus according to the invention, arranged on a stretch of water and with a riser immersed in said stretch of water;

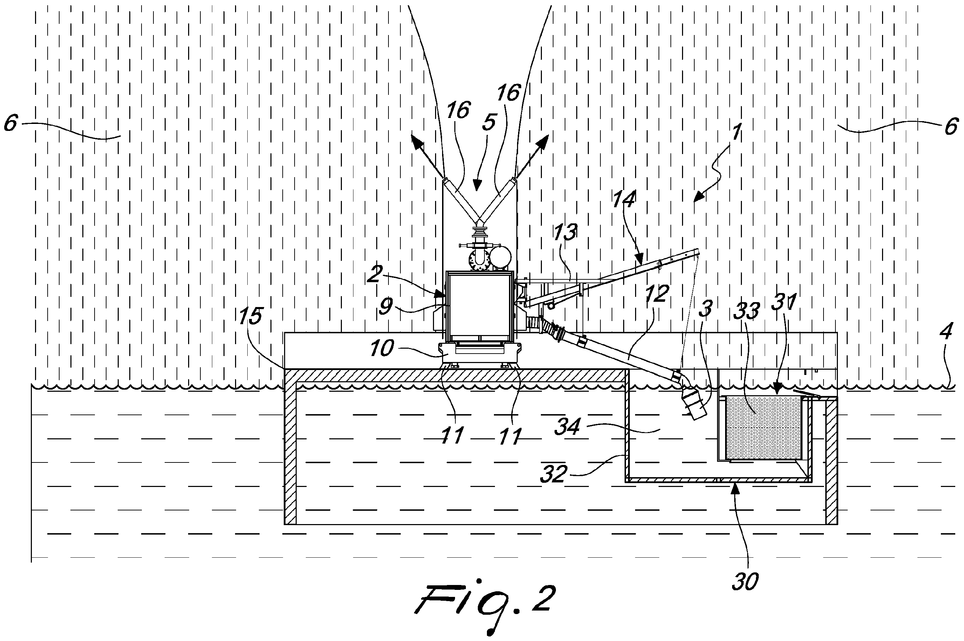

Figure 2 is a sectional front view of the apparatus according to the invention during the provision of two water screens;
Figures 3 to 9 are schematic views of various examples of water screens that can be provided by the apparatus according to the invention;

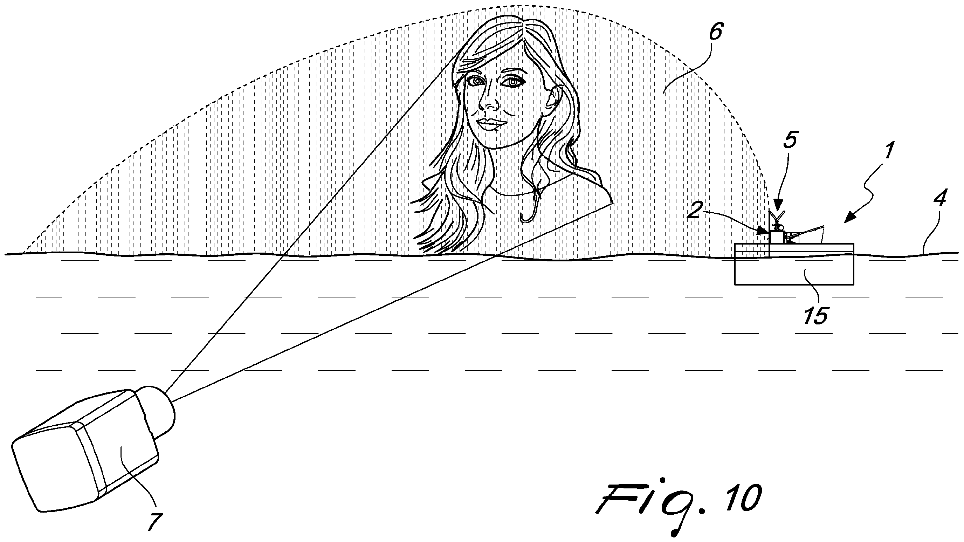

Figure 10 is a view of the projection of an image on a water screen provided by the apparatus according to the invention;

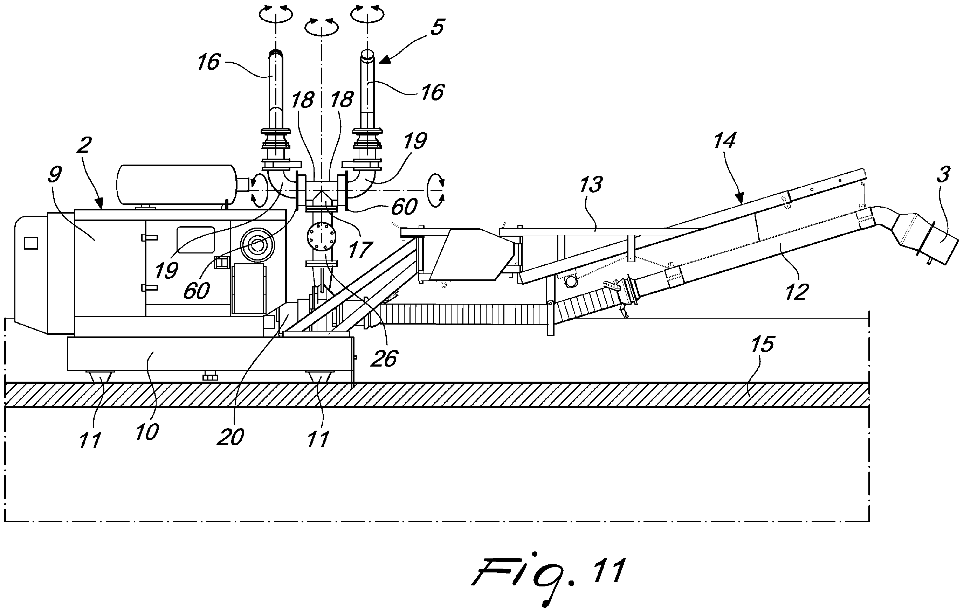

Figure 11 is a side view of the apparatus according to the invention with the riser arranged outside the stretch of water;

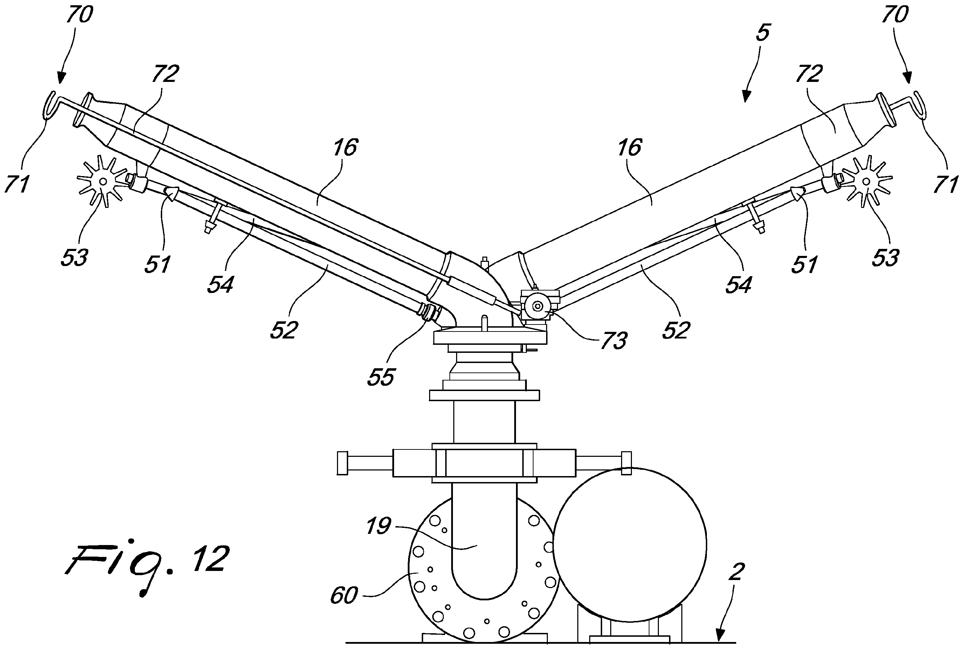

Figure 12 is an enlarged-scale front elevation view of a detail of the apparatus according to the invention.

With reference to the figures, the apparatus for performing shows in stretches of water according to the invention, generally designated by the reference numeral 1, comprises a pumping assembly 2 that is adapted to draw, with its intake, in a stretch of water 4, constituted for example by a lake, a river, a stretch of sea and so forth.

More particularly, the pumping assembly 2 is, preferably, arranged outside the stretch of water 4 and is provided with a riser 3, which is connected to its intake 2a, which can be immersed in the stretch of water 4.

With its own delivery 2b, the pumping assembly 2 is connected to water dispensing means 5 which are adapted to create at least one water screen 6 above the stretch of water 4.

The apparatus according to the invention is further provided with at least one light projector 7, preferably arranged on the shore, which has the function of projecting on the water screen 6 at least one luminous image, so as to obtain very striking stage design effects that can be seen even at a great distance from the water screen 6. Conveniently, at least one sound player/speaker device may be associated with the light projector 7.

The particularity of the invention resides in that it comprises means for atomizing the water dispensed by the dispensing means 5, so that the water screen 6 created by the dispensing means 5 is dimensionally much larger than those obtainable according to the background art.

Advantageously, means for varying the atomization generated by the atomizing means, better detailed hereinafter, are also provided so as to allow to modify the characteristics of the water screen 6 created by the dispensing means 5.

Conveniently, the pumping assembly 2 is actuated by an internal combustion engine.

In greater detail, the pumping assembly 2 is preferably constituted by a motor pump provided conveniently with a centrifugal pump having a horizontal axis, for water supply with variable flow rate and pressure, driven by a diesel engine and structured particularly for working with flow rates substantially between 1,000 and 10,000 1/min and with pressure values comprised substantially between 9 and 10 bars.

The diesel engine that drives the centrifugal pump is preferably of the liquid-cooled in-line 6-cylinder type with electric starter for industrial applications, capable of generating a power of 175 kW (238 hp), at 2,200 rpm, and a torque of 1,020 Nm at 1,500 rpm.

The pumping assembly 2 is provided, conveniently, with a sound insulation hood 9 in order to protect the operators and the surrounding environment from noise pollution and protect, even from large amounts of water, the components of the motor pump, such as the centrifugal pump and the diesel engine, accommodated inside it. Conveniently, ports for the ventilation of the diesel engine are formed in the sound insulation hood 9 and are shaped so as to allow the flow of the cooling air without drawing the water that arrives from the distribution and atomization means 5.

The pumping assembly 2 may be provided, moreover, with self-priming means and with means for automatic and probe-controlled actuation, in order to have safety control, as well as with a base structure, made of press-folded steel plate, with the function of a reservoir, placed on a fixed base 10 provided with parking feet 11 for its anchoring on a resting surface that is sturdy and capable of absorbing vibrations.

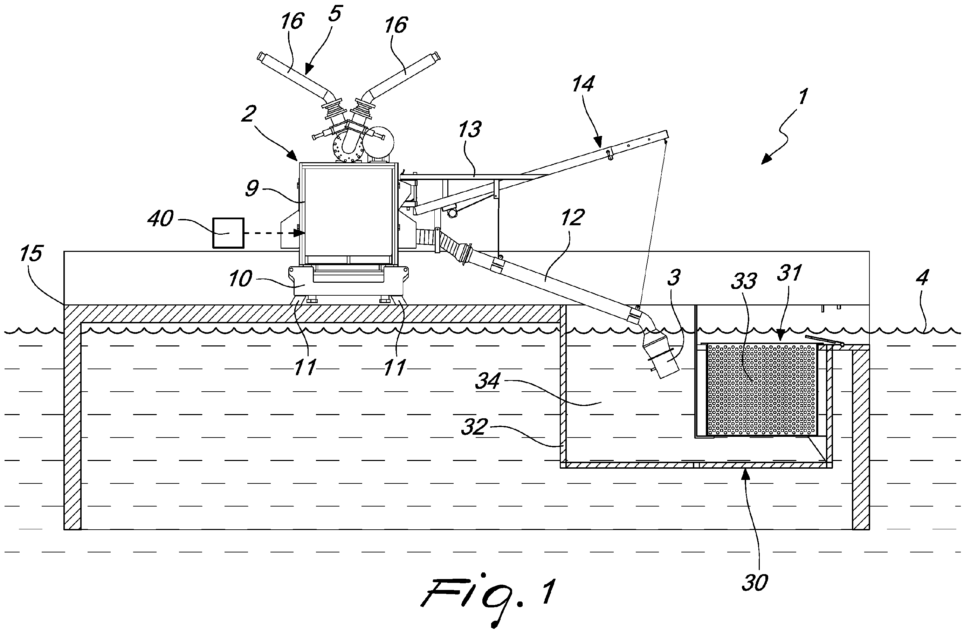

Advantageously, the pumping assembly 2 is also provided with a riser pipe 12 that connects the riser 3 to the intake 2a of said pumping assembly and is associated with a movement device provided with a lattice girder 13 which supports a metallic structure 14 that supports in a suspended condition the riser pipe 12 and is provided with means that allow its rotation, so as to be able to move the riser pipe 12 to an extended working position, shown for example in Figure 1, in which the riser 3 can be immersed in the stretch of water 4, and in a resting and transport folded position.

Preferably, the pumping assembly 2 is mounted on floating means which allow its placement on the stretch of water 4.

In particular, the floating means are conveniently provided by a floating platform 15 and are provided advantageously with propulsion means in order to allow their movement on the stretch of water 4.

More particularly, the floating platform 15 may be made, for example, of steel and have a nominal load capacity of 60,000 kg, while the propulsion means may be provided, for example, by a 250-hp outboard motor.

In combination with the floating platform 15, it is possible to optionally provide an auxiliary floating platform, having larger dimensions, also made of steel, having a nominal load capacity of for example 10,000 Kg and designed to position secondary light projectors.

It should be noted that nothing forbids the pumping assembly 2 from being installed or in any case arranged on the shore, i.e., on land, near the stretch of water, and in this case it may be provided appropriately with wheels for its convenient transport.

Advantageously, the dispensing means 5 comprise one or more emission nozzles 16, connected to the delivery 2b of the pumping assembly 2 and in particular of the centrifugal pump of the motor pump and capable of dispensing at least one jet of water, utilizing the pressure created by said pump.

Conveniently, the dispensing means 5 can be movable on command, so as to allow to vary the position of the water screen 6 with respect to the pumping means 2, as will be explained also hereinafter.

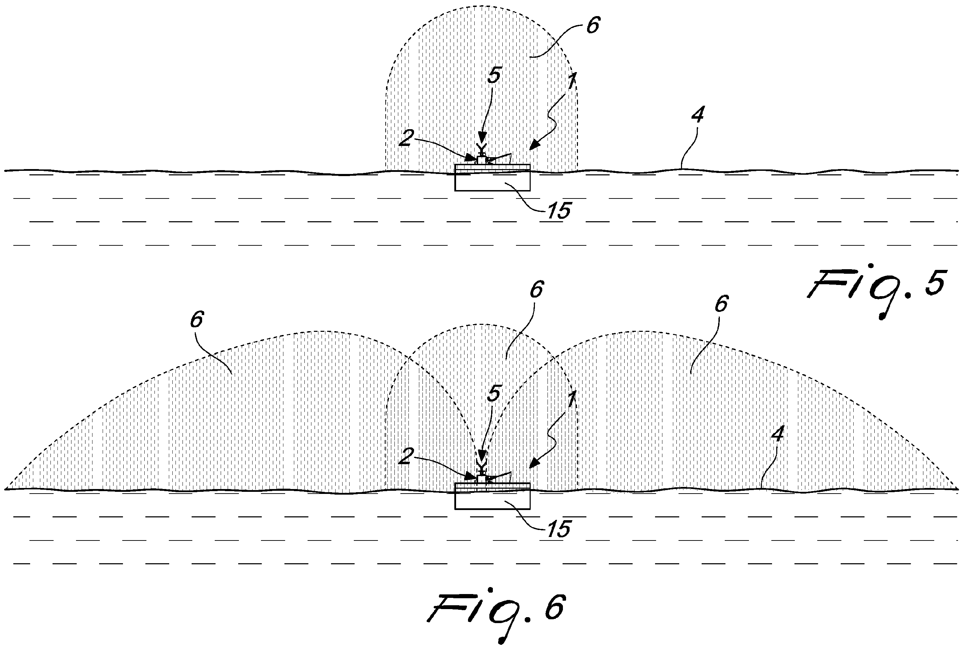

Advantageously, the nozzles 16 used can be capable of dispensing a fan-like jet, by means of a plate, not shown, against which a water flow is propelled, atomized by virtue of the atomizing means, so as to open the jet, creating a sort of atomized water fan, shown by way of example in particular in Figure 5, which creates a large water screen 6 on which it is possible to reflect the images projected by the light projector 7.

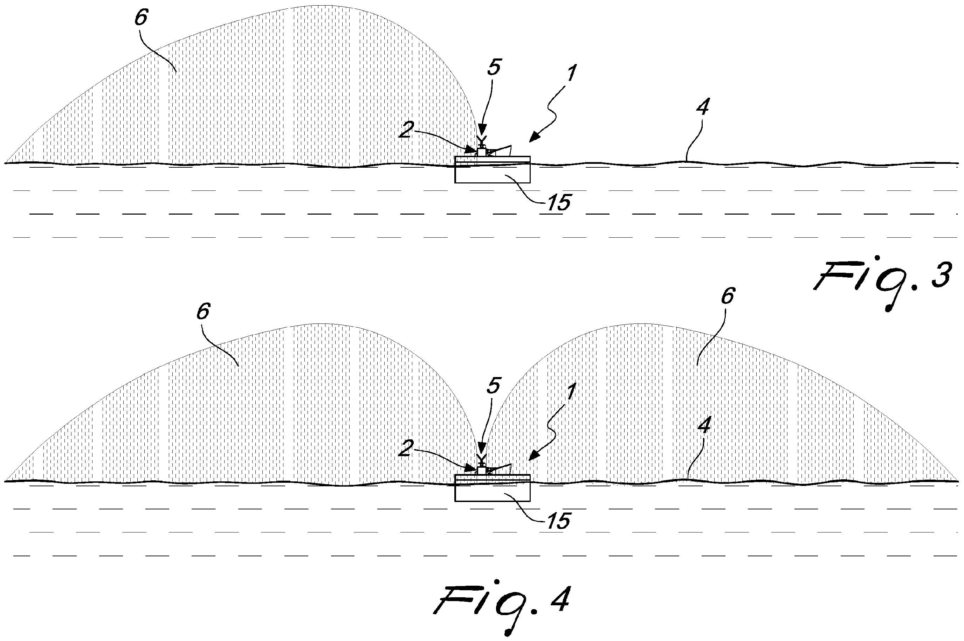

Nozzles 16 capable of dispensing a jet of water that is inclined upward with respect to the horizontal, i.e., oriented so as to form a predetermined angle with respect to the horizontal, and in particular with respect to the free surface of the stretch of water 4, can be also used, so that the dispensed jet can trace a parabola, from which droplets of water detach and, by falling by gravity toward the stretch of water 4, form a water screen, as in the example of Figure 3. In this case, the nozzles 16 have a tubular shape, substantially like a cannon or lance.

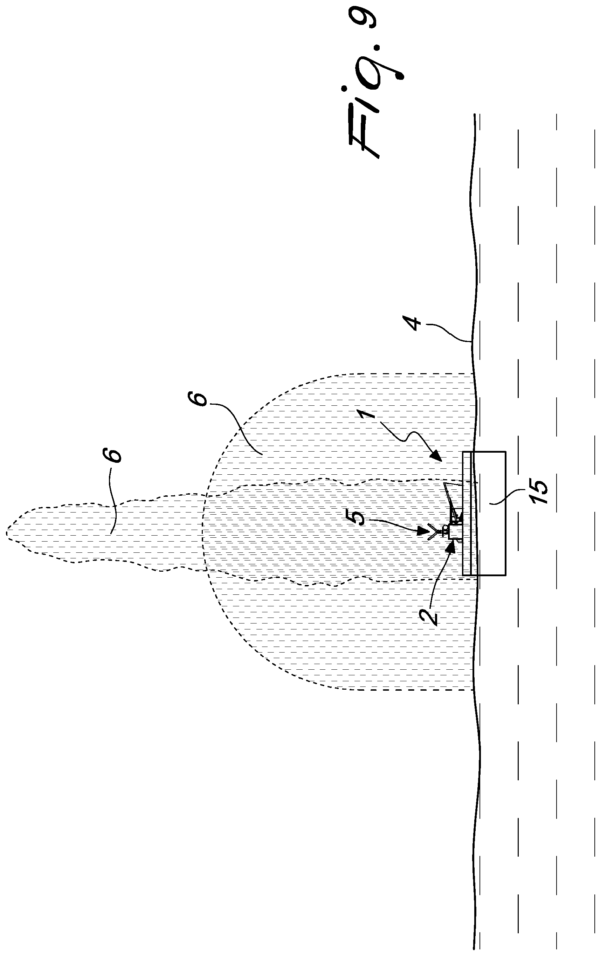

It is also possible to provide for the use of nozzles 16 capable of dispensing a jet that extends substantially vertically, such as the one shown by way of example in Figure 9, so as to create particular show effects.

Advantageously, even two or more nozzles 16 of the same or different type can be installed on the delivery 2b of the pumping assembly 2.

Consequently, the water jets that start from their emission point may extend with multiple types, for example for 140 m in length and 40 m in height and with flow rates of water, for example, of 10,000 1/min and at a pressure of 9 bars.

It should be noted, moreover, that the generated water jets can be adjustable based on the required stage design.

More particularly, in order to make the operation of the apparatus as versatile as possible, in relation to the weather conditions and to the stage design requirements, the dispensing means 5 mounted on the pumping assembly 2 may be provided with an orbital adjustment of the nozzles 16, which can be actuated manually or automatically, by virtue of suitable motor means, optionally with remote actuation, so as to be able to adjust the position and range of the nozzles 16, based on the size of the water screen 7 that one wishes to create.

For example, in order to provide said possibility of orbital adjustment of the position of the nozzles 16 with respect to the pumping assembly 2, it is possible to arrange at least two nozzles 16 in positions which are mutually diametrically opposite with respect to the conveniently vertical axis of the delivery 2b of the pumping assembly 2 and to render said nozzles 16 rotatable about respective axes which are substantially parallel to the axis of the delivery 2b of the pumping assembly 2 as well as about the axis of the delivery 2b of the pumping assembly 2.

More particularly, in this case, the delivery 2b is connected to a central connector 17, which has a vertical axis, is mounted rotatably about the axis of the delivery 2b, and feeds at least two radial ducts 18, which extend substantially, on mutually opposite sides, from the central connector 17, each one leading into an associated outlet connector 19, to which a respective nozzle 16 is coupled with the possibility to rotate about an axis that is parallel to the axis of the central connector 17 and passes through its inlet.

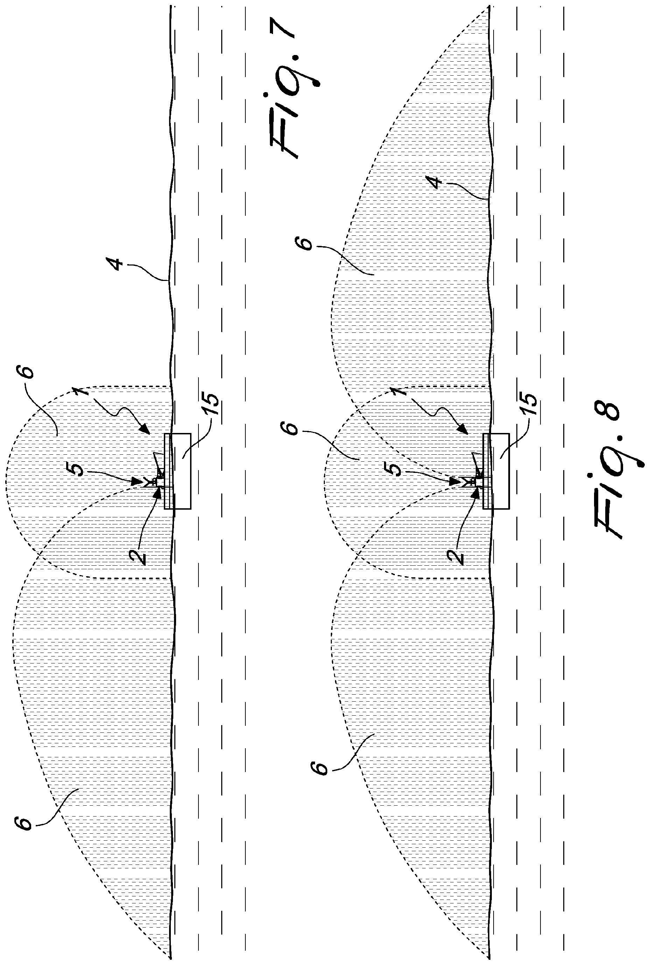

Advantageously, multiple nozzles 16 that are mutually different and mutually interchangeable are available as part of the apparatus, in order to allow to provide different configurations of the nozzles 16 that dispense different types of water jets, so that it is possible to create a wide range of water screens 6 that are mutually different in terms of shapes or sizes, as shown schematically by way of example in Figures 3 to 9.

For example, it is possible to provide the apparatus according to the invention with: at least one nozzle 16 provided with a plate, capable of providing a fan-shaped water screen 6 having preferably a total length of 40 m and a height of 25 m, advantageously with a water flow rate of 5,000 1/min; at least one nozzle 16 with a vertical jet, preferably with a diameter of 10 m and a height of 40 m and a flow rate of 10,000 1/min; at least two cannon nozzles 16, preferably with ranges of substantially 80 m each and a height of 25 m.

It should be noted that the nozzles 16 are structured so as to create a uniform and adjustable atomization of the sprayed water which allows to obtain one or more uniform and stable water screens 6 along the entire range of the jets dispensed by the nozzles 16, with droplets of variable diameter depending on the atmospheric conditions, with a greater diameter in case of wind.

Conveniently, the atomizing means are constituted by means capable of breaking up, preferably in an adjustable manner, the water jets emitted by the nozzles 16 of the dispensing means 5.

In particular, the atomizing means comprise means 50 for the emission of at least one pulsed jet against the jet dispensed by a respective nozzle 16, while the means for varying the atomization comprise means for adjusting the frequency of said pulsed jet.

In greater detail, the means 50 for the emission of a pulsed jet comprise at least one auxiliary nozzle 51 associated with a corresponding nozzle 16.

The auxiliary nozzle 51 is oriented substantially in the direction of the jet dispensed by the corresponding nozzle 16 and is connected to the delivery 2b of the pumping assembly 2.

With reference to the case in which the nozzle 16 is of the cannon type, the auxiliary nozzle 51 is arranged in a region below the tubular body of the nozzle 16 and is connected substantially to the inlet of the nozzle 16 by means of an auxiliary pipe 52 which is extended substantially parallel to the body of the nozzle 16.

At least one vaned wheel 53, which can rotate freely, is arranged with its vanes in front of the auxiliary nozzle 51 and is supported by an auxiliary rod 54 which is integral with the corresponding nozzle 16. The vaned wheel 53 has the function of interrupting cyclically the jet of the nozzle 51, as a consequence of its rotation produced by the impact of the jet from the auxiliary nozzle 51 against its vanes, thus rendering intermittent the jet that is propelled in output from the vaned wheel 53 toward the jet dispensed by the nozzle 16.

The pulsed jet thus obtained, by striking the main jet that exits from the nozzle 16, creates a pressure that breaks the continuity of the jet of the nozzle 16, atomizing it.

Advantageously, the means for adjusting the frequency of the pulsed jet comprise valve means for adjusting the flow of water fed to the auxiliary nozzle 51, which are in practice constituted by a faucet 55 interposed along the auxiliary pipe 52. By acting on such faucet 55 it is possible to adjust the flow of water that feeds the auxiliary nozzle 51, with consequent variation of the rotation rate of the vaned wheel 53 and, therefore, of the exit frequency of the intermittent jets from the vaned wheel 53 toward the jet of the nozzle 16. The higher the frequency of the pulsed jet propelled against the jet of the nozzle 16, the greater is the atomization of the jet of the nozzle 16.

Advantageously, the means for varying the breadth of the water screen 6 can be provided by virtue of means that allow to vary the inclination with respect to the horizontal of the jet dispensed by the nozzle 16 that creates the water screen 6.

For example, the means for varying the inclination of the jet can be provided, for each nozzle 16, by means of a respective rotary joint 60, which is interposed between the corresponding radial duct 18 and the corresponding outlet connector 19.

It should be noted that the variation of the inclination of the jet emitted by the nozzles 16 also determines a variation in the atomization of said jet.

Advantageously, means for varying the thickness of the or each water screen 6 are also provided which can be operated in some projection circumstances in order to create different shades of color and vary the depth of the images.

For example, the means for varying the thickness of the water screen 6 comprise means 70 for adjusting the cross-section of the jet of water emitted by each nozzle 16. With reference in particular to the nozzles 16 of the cannon type, the means 70 for adjusting the cross-section of the jet can be conveniently provided, for each nozzle 16, by a substantially hook-shaped jet breaker element 71, which can move closer or away from the axis of the jet emitted by the corresponding nozzle 16.

In particular, the jet breaker element 71 is arranged facing the outlet of the nozzle 16 and is supported by an actuation rod 72, which can rotate about its own axis, for example by means of an adjustment wheel 73, so that by means of the rotation of the actuation rod 72 it is possible to vary the portion of the jet breaker element 71 that intercepts the jet emitted by the nozzle 16, thus being able to widen or narrow the cross-section of said jet. The greater the portion of the jet breaker 71 that intercepts the jet emitted by the nozzle 16, the greater the cross-section of the jet and, therefore, also the thickness of the water screen 6 generated by the jet as well as the depth of the images projected onto said water screen.

Advantageously, the pumping assembly 2 may also be provided with an auxiliary outlet to which is possible to connect additional components.

For example, it is possible to provide the possibility to connect the pumping assembly 2 at least to one hydraulic manifold, which is extended substantially horizontally, preferably proximate to the free surface of the stretch of water 4 and allows, by means of a plurality of connectors or branch-offs, distributed along its extension and arranged at mutual distances that can be variable depending on the requirements, to feed the jets of water, which may optionally be activated in a mutually independent manner.

Conveniently, the water jets in output from the branch-offs of the hydraulic manifold are controlled by means of adapted valves that are power-assisted by slow-opening pneumatic motors and can be rotatably movable so as to allow the creation of three-dimensional stage layouts.

Advantageously, the branch-offs of the hydraulic manifold are arranged on floats in order to make them independent of the main station.

Advantageously, a riser filter 30 is associated with the riser 3 of the pumping assembly 2 and allows to perform a cleaning of the surface of the stretch of water in the region that is adjacent to the pumping assembly 2.

The riser filter 30 is conveniently structured so as to have a large intake surface, in order to reduce the suction speed proximate to it and thus facilitate the escape of any animals that have entered the suction area of the pumping assembly 2.

The riser filter 30 is, advantageously, provided moreover with a collector 31 that has the function of retaining any impurities, dirt and waste present in the stretch of water 4.

In detail, the riser filter 30 is, for example, constituted by a skimmer device, which by utilizing the microcurrents of the water generated in suction by the pumping assembly 2, is able to filter and retain, by means of a cascade effect and nets, all the impurities and particles floating on the surface of the stretch of water 4 so that the water, once filtered by the skimmer device, can exit the pumping assembly 2 and the distribution and atomization means 5 clean and finely atomized, thus creating a perfect water screen 6 useful for image projections.

In even greater detail, the riser filter 30 has a box-like structure 32 which is designed to be placed in the stretch of water 4 and forms internally, along its longitudinal extension, at least two compartments which mutually communicate, are open in an upper region, are designed in turn to be filled by the water and are constituted respectively by a drum 33 with microperforated walls, which provides the collector 31, and an intake tank 34, in which the riser 3 of the pumping assembly 2 is immersed.

Preferably, the riser filter 30 is sized so as to be capable of filtering 20,000 1/min of water and retaining floating impurity particles with dimensions up to 4 mm diameter, for a total of approximately 800 Kg.

At the end of each show or in any case when the collector 31 is saturated, said collector 31 can be emptied and the filtrate can then be stored on land or on an adapted vehicle ready for the landfill.

Conveniently, the apparatus is further provided with means for automated management of operation, which can be advantageously programmed and operated remotely, preferably by means of a user device, such as for example a smartphone, a tablet or others, provided with a suitable software application.

In particular, there is a central control and protection unit 40, which is designed to manage the operation of the pumping assembly 2 and more specifically of the motor pump; the central unit 40 can conveniently be programmed and operated from a distance, for example, via a GSM network, or remotely, by means of a software application, operating on the Internet, installed on a user device or usable by means of an adapted user interface panel and configured to allow the possibility to control and adjust in sectors the components of the apparatus, so as to be able to operate each individual nozzle 16 individually, or combinations of nozzles 16, so as to provide the different configurations of jets as shown in the figures.

It is also possible to provide for the presence of a PLC control unit, for example positioned and operated onshore in the presence of an operator, and preset to control, for example by radio, the opening or closing of the valves that control the hydraulic manifold branch-offs.

The PLC control unit is advantageously interfaced with the central unit 40 of the motor pump and, optionally, with other servo-control devices provided in order to control additional motors and valves installed on the apparatus.

In this manner, the management and control of the activation sequence of the water jets emitted by the distribution and atomization means 5 can be entrusted to the PLC control unit, being therefore able to modify the stage design of the water jets and consequently optimize the projections.

Again, the PLC control unit can be entrusted with the management of the light projector 7, based on the sequence of images that one wishes to project on the water screen or screens generated by virtue of the distribution and atomization means 5.

The operation of the apparatus according to the invention is as follows.

The apparatus is set up by installing on the delivery of the pumping assembly 2 the nozzles 16 selected according to the show that one wishes to provide, and the PLC control unit is programmed, again based on the show to be provided, for example by means of a user device.

By virtue of the floating means, the pumping assembly 2 is placed on the stretch of water 4 and the riser 3 of the pumping assembly 2 is immersed in the intake tank 34 of the pumping filter 30 previously installed in the water.

Following a start command issued by the user, the PLC control unit activates the pumping assembly 2 and optionally commands the opening/closing of valves and/or the activation of motors that move the nozzles 16, so as to generate water jets that form, above the stretch of water 4, one or more water screens 6.

At this point, the PLC control unit activates the light projector 7 and optionally the sound player/speaker device, so as to project images onto the generated water screens 6, creating an extremely striking show.

In practice it has been found that the invention achieves the intended aim and objects and in particular the fact is stressed that the apparatus allows to perform on stretches of water, water screens with such dimensions to allow, by virtue of front projections or rear projections, to obtain very striking stage design effects appreciable in particular at night, with themes visible from a distance of even more than 500 m.

Furthermore, it should be noted that the apparatus according to the invention, by virtue of the different types of nozzles usable and of the different types of movable water jets that can be provided, makes it possible to create dynamic effects that can be adapted to the most disparate presentation requirements.

Furthermore, it has been possible to verify experimentally that by virtue of the atomizing devices used, the apparatus according to the invention allows to considerably enrich the treated water with air, with consequent improvement of the oxygenation conditions of the portion of the stretch of water that is adjacent to the apparatus.

The invention thus conceived is susceptible of numerous modifications and variations, all of which are within the scope of the accompanying claims; all the details may furthermore be replaced with other technically equivalent elements.

In practice, the materials used, as well as the contingent shapes and dimensions, may be any according to the requirements and the state of the art.

The disclosures in Italian Patent Application No. 102021000016271 from which this application claims priority, are incorporated by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus for performing shows in stretches of water, comprising a pumping assembly (2) adapted to draw, with its intake, in a stretch of water (4) and connected, with its delivery (2b), to water dispensing means (5) adapted to create at least one water screen (6) above said stretch of water (4), at least one light projector (7) being provided which is adapted to project onto said at least one water screen (6) at least one image, **characterized in that** it comprises means for atomizing the water dispensed by said dispensing means (5).

2. The apparatus according to claim 1, **characterized in that** it comprises means for varying the atomization generated by said atomizing means.

3. The apparatus according to one or more of the preceding claims, **characterized in that** said pumping assembly (2) is arranged outside of said stretch of water (4) and is connected, with its intake (2a), to a riser (3) which can be immersed in said stretch of water (4).

4. The apparatus according to one or more of the preceding claims, **characterized in that** said pumping assembly (2) is actuated by an internal combustion engine.

5. The apparatus according to one or more of the preceding claims, **characterized in that** said pumping assembly (2) is mounted on means for floating on said stretch of water (4).

6. The apparatus according to one or more of the preceding claims, **characterized in that** said dispensing means (5) can move on command in order to vary the position of said at least one water screen (6) with respect to said pumping means (2).

7. The apparatus according to one or more of the preceding claims, **characterized in that** it comprises means for varying the breadth of said at least one water screen (6).

8. The apparatus according to one or more of the preceding claims, **characterized in that** it comprises means for varying the thickness of said at least one water screen (6).

9. The apparatus according to one or more of the preceding claims, **characterized in that** said dispensing means (5) comprise at least one nozzle (16) for the emission of at least one water jet.

10. The apparatus according to one or more of the preceding claims, **characterized in that** said atomizing means comprise means for the emission of at least one pulsed jet against the jet dispensed by said at least one nozzle (16).

11. The apparatus according to one or more of the preceding claims, **characterized in that** said means for varying the atomization comprise means for adjusting the frequency of said pulsed jet.

12. The apparatus according to one or more of the preceding claims, **characterized in that** said means for the emission of a pulsed jet comprise at least one auxiliary nozzle (51), which is oriented in the direction of the jet dispensed by said at least one nozzle (16) and is connected to the delivery of said pumping assembly (2), and at least one vaned wheel (53), which can rotate freely and is arranged with its vanes in front of said auxiliary nozzle (51), in order to interrupt cyclically the jet emitted by said auxiliary nozzle (51).

13. The apparatus according to one or more of the preceding claims, **characterized in that** said means for adjusting the frequency of said pulsed jet comprise valve means for adjusting the flow of water fed to said auxiliary nozzle (51).

14. The apparatus according to one or more of the preceding claims, **characterized in that** said means for varying the breadth of said at least one water screen (6) comprise means for varying the inclination of the jet dispensed by said at least one nozzle (16) with respect to the horizontal.

15. The apparatus according to one or more of the preceding claims, **characterized in that** it comprises at least two nozzles (16) arranged in positions which are mutually diametrically opposite with respect to the axis of the delivery (2b) of said pumping assembly (2), said nozzles (16) being able to rotate about respective axes which are substantially parallel to the axis of the delivery (2b) of said pumping assembly (2) and about the axis of the delivery (2b) of said pumping assembly (2), for an orbital adjustment of their position with respect to said pumping assembly (2).
